# EUROPEAN PATENT SPECIFICATION

(11) **EP 0 449 581 B1**
(45) Date of publication and mention of the grant of the patent: **14.06.1995**
(21) Application number: 91302634.0
(22) Date of filing: 26.03.1991
(51) Int. Cl.: E21D 9/06

(54) **Shield tunnelling apparatus**
Schildvortriebsmaschine
Machine de creusement à bouclier

(30) Priority: 29.03.1990 JP 78847/90
(43) Date of publication of application: 02.10.1991
(73) Proprietor: Kabushiki Kaisha Iseki Kaihatsu Koki, Shibuya-ku Tokyo (JP)
(72) Inventor: Terasawa, Fumiaki, Chiba-shi, Chiba-ken (JP)
(74) Representative: Low, Peter John

(56) References cited:
- GB-A- 2 095 720
- US-A- 4 273 468

## Description

### BACKGROUND OF THE INVENTION

### Field of the Invention:

This invention relates to a shield tunnelling apparatus provided with a target for receiving a light ray directed along the axis of a shield body.

### Description of the Prior Art:

In a pipe propulsion engineering method in which a shield tunnelling apparatus and a main thrusting apparatus for advancing the tunnelling apparatus together with pipes following the tunnelling apparatus are used, when the advance direction of the tunnelling apparatus deviates from a planned line of a tunnel to be constructed, so-called directional correction for correcting the advance direction of the tunnelling apparatus is carried out.

This kind of directional correction is generally done by using a light ray such as a laser beam directed along the axis of the tunnel to be constructed as a reference line, disposing a target for receiving the light ray in the tunnelling apparatus, and thereby correcting the advance direction of the tunnelling apparatus such that the light ray is incident on a predetermined portion of the target.

GB 2095720 describes a tunnelling apparatus having two laser beam sources directed along the tunnel axis and two targets. The beam displacements from the targets are used to calculate the angular and transverse displacement of the apparatus relative to the proposed tunnel axis.

US 4273468 illustrates a method of determining corrections to be applied to the motion of a tunnelling shield to maintain the shield along a predetermined path. A beam of light is focussed onto an optical fibre cable and the output displayed on a screen to facilitate the correction determination.

In the above mentioned directional correction, since the light ray acts as the reference line, the travelling direction of the light ray is directed toward a direction along the axis (planned reference line) of the tunnel to be constructed, and the target is disposed such that the center of the target is aligned with the axis of the tunnelling apparatus.

When the axis of the tunnelling apparatus is aligned with the planned reference line, the light ray travels toward a direction along the axis of the tunnelling apparatus and is incident on the center of the target.

On the other hand, when the axis of the tunnelling apparatus is deviated from the planned reference line, the light ray is incident on a portion deviated from the center of the target. In this case, the advance direction of the tunnelling apparatus is corrected such that the light ray is incident on the center of the target.

However, in case of a tunnelling apparatus for a tunnel having a bore which is too small to allow an operator to enter, the installations disposed in the shield body hinders the light ray from travelling along the axis of the tunnel. Particularly, in case the excavation distance is long, an auxiliary pump for draining excavated matter should be disposed in the tunnelling apparatus, however, the auxiliary pump blocks the light ray. Therefore, in the tunnelling apparatus in which the light ray directed toward a direction along the axis of the tunnel is used, the size and amount of the installations disposed in the shield body are limited.

In order to solve the problem on such limitation of the size and amount of installation, it is thought that a light ray directed toward a direction away from the axis of the tunnel is used. However, in this case, a reference line for measurement is deviated from the axis of the tunnel, and therefore, the directional correction should be done in consideration of the displacement of the light ray from the axis of the tunnel. As a result, the directional correcting operation becomes troublesome.

### SUMMARY OF THE INVENTION

An object of the present invention is to provide a shield tunnelling apparatus capable of disposing the installations reaching the position of the axis of a shield body, in spite of a light ray directed toward a direction along the axis of a tunnel being used.

A shield tunnelling apparatus comprising:
a first tubular shield body to which a cutter assembly for excavation and a drive mechanism for driving said cutter assembly are attached;
a second shield body connected to the rear of said first shield body;
a target disposed in said first shield body so as to receive a light ray directed along the axis of said second shield body;
first optical path changing means disposed in said second shield body, and for changing the optical path of the light ray directed toward said target so that the light ray may be directed toward an optical path displaced away from the axis of said second shield body; and
second optical path changing means disposed in said second shield body, and for changing the optical path of the light ray passing said first optical path changing means so as to be directed along the axis of said second shield body;
characterized in that:
said first optical path changing means is disposed at a position upstream of one or more installations placed in said second shield body so as to obstruct said axis of said second shield body, and for making the light ray directed along the axis of said second shield body to be directed along the optical path displaced away from the axis of said second shield body so that the light ray directed toward said target may avoid said installations; and
path changing means is disposed at a postion downstream of the installations to make the light ray passing through said first optical path changing means to be directed toward the axis of said second shield body and then directed along the axis of said second shield body.

The light ray emitted from a light source installed in a start shaft or the like is directed toward a direction along the axis of the tunnel to be constructed, then directed toward the optical path displaced away from the axis of the tunnelling apparatus by the first optical path changing means in the second shield body, and then directed toward a direction along the axis of the tunnelling apparatus by the second optical path changing means.

Thus, according to the present invention, the installations having the size to reach the axis of the tunnelling apparatus can be disposed within a space between the first and second optical path changing means, in spite of using the light ray directed along the axis of the tunnel.

The first optical path changing means may comprise a first reflector for deflecting said light ray directed along the axis of said second shield body radially outward of said shield body and a second reflector for deflecting the light ray deflected by said first reflector to the direction parallel to the axis of said second shield body, said second reflector being directed toward the first reflector, and the second optical path changing means may include a third reflector for making the light ray deflected by said second reflector to be deflected toward the axis of said second shield body, said third reflector being directed toward the second reflector, and a fourth reflector for making the light ray deflected by said third reflector to be deflected so that the light ray deflected by said third reflector may advance on the axis of said second shield body, said fourth reflector being directed toward the third reflector.

### BRIEF DESCRIPTION OF THE DRAWINGS

The foregoing and other objects and features of the invention will become apparent from the following description of a preferred embodiment of the invention with reference to the accompanying drawings, in which:
Fig. 1 is a sectional view showing an embodiment of a shield tunnelling apparatus according to the present invention; and
Fig. 2 is a sectional view taken along a line 2-2 in Fig. 1.

### DETAILED DESCRIPTION OF THE PREFERRED EMBODIMENT

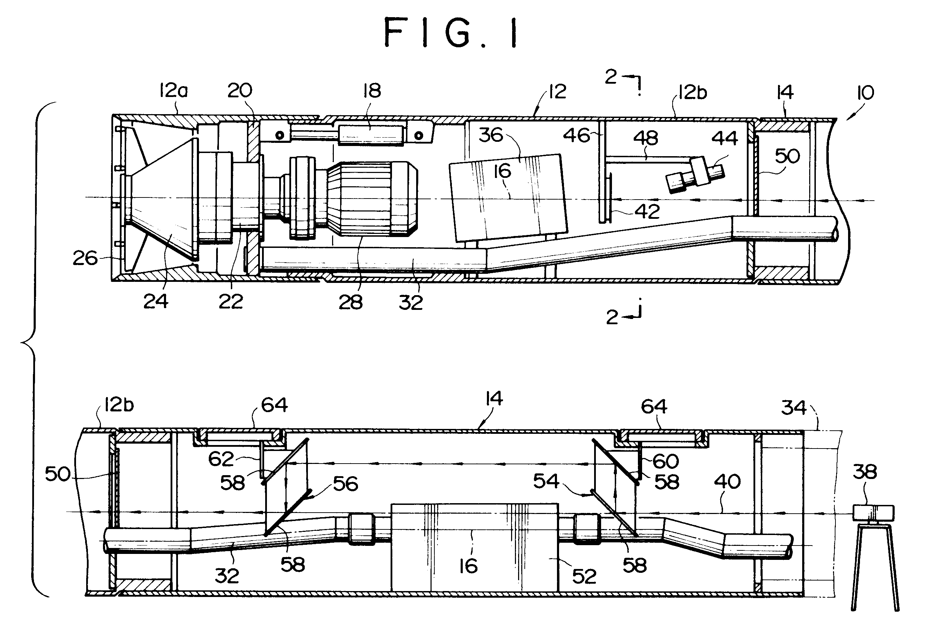

Referring to Fig. 1, a shield tunnelling apparatus 10 comprises a first tubular shield body 12 and a second shield body 14 connected to the rear of the first shield body 12. Both shield bodies 12, 14 are butted against each other so as to have a common axis 16, and separably connected to each other by a plurality of bolts.

The first shield body 12 is divided into two tubular portions 12a,12b. The front end of the tubular portion 12b is slidably received in the rear end of the tubular portion 12a, and the rear end of the tubular portion 12b is connected to the front end of the second shield body 14 by a plurality of bolts. Both tubular portions 12a,12b are connected to each other by a plurality of direction-correcting jacks 18.

The interior of the tubular portion 12a is partitioned into a front area and a rear area by a partition wall 20. The partition wall 20 is attached with a sleeve 22 extending in the direction of the axis 16. The sleeve 22 supports a crankshaft (not shown) rotatably around the axis 16. The crankshaft is disposed such that an eccentric portion of the crankshaft is placed in the front area.

The eccentric portion of the crankshaft rotatably supports a rotor 24, and a cutter assembly 26 is mounted on the rotor. The cutter assembly 26 is a well-known cutter assembly provided with a plurality of arms extending from the rotor 24 radially outward and a plurality of cutter bits respectively mounted on the tips of the arms.

The partition wall 20 is further attached with a rotary mechanism 28 for rotating the crankshaft. The rotor 24 and the cutter assembly 26 are constituted such that the turning motion (revolution) around the axis 16 and the rotational motion (rotation around its own axis) around the eccentric portion of the crankshaft are performed through the rotation of the crankshaft. Such constitution is of well known art disclosed in JP-A-63-189596, for example, and therefore, the detailed description thereof will be omitted.

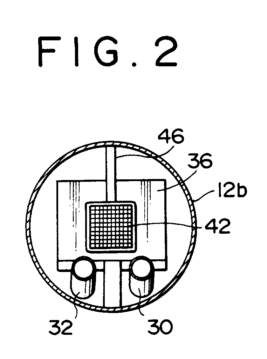

Muddy water for draining excavated matter is supplied from the ground side to the front area of the tubular portion 12a through a water supply pipe 30 (See Fig. 2). The muddy water supplied to the front area of the tubular portion 12a is drained together with the excavated matter to the ground side through a drain pipe 32. The water supply pipe 30 and the drain pipe 32 extend to the ground surface through the tubular portion 12b, the second shield body 14, a pipe 34 such as a concrete pipe and a start shaft (not shown).

In the tubular portion 12b are disposed an equipment 36 such as a relay and an electromagnetic valve for controlling the operations of the jack 18 and the rotary mechanism 28, a target 42 for receiving a light ray 40 such as a laser beam emitted from a light source 38 installed in the start shaft, and a television camera 44 for taking a picture of the target 42. The light source 38 is disposed such that the light ray 40 is directed toward a direction along the axis (planned reference line) of a tunnel to be constructed.

As shown in Fig. 2, the target 42 is comprised of a rectangular panel having ruled lines in the form of checker, and mounted on the tubular portion 12b through a bracket 46 such that the center of the target is aligned with the axis 16. On the other hand, the television camera 44 is mounted on the bracket 46 through a bracket 48 such that the television camera 44 takes a picture of the whole target 42. A video image taken by the television camera 44 is displayed on a monitor installed on the ground.

In case the shield tunneling apparatus is provided with an indicator for indicating a pressure supplied to the jack 18, an indicator for indicating amount of the expansion and shrinkage of the jack 18, and an indicator for indicating a pressure in the front area or like indicator, these indicators may be disposed in the proximity of the target 42 and photographed together with the target 42 by the television camera 44.

The rear end of the tubular portion 12b is closed by a transparent plate 50. Therefore, a space between the partition wall 20 in the first shield body 12 and the transparent plate 50 is partitioned from the outside, so that the equipment disposed in the space is protected against exterior moisture and dust or the like.

In the second shield body 14 are disposed an auxiliary pump 52 for sending the muddy water from the front area to the ground side and a pair of optical path changing units 54, 56 for changing the optical path of the light ray 40.

The first and second optical path changing units 54, 56 are disposed on the opposite side to the auxiliary pump 52. Each of the optical path changing units 54, 56 is provided with a pair of reflectors 58 disposed parallel to each other. The optical path changing units 54, 56 are supported respectively by brackets 60, 62 mounted on the second shield body 14.

One reflector 58 of the first optical path changing unit 54 is disposed such that the light ray 40 travelling along the axis 16 is deflected from the axis 16 outward in the radial direction of the second shield body 14, i.e., upward by the above-mentioned one reflector 58, and the other reflector 58 is disposed such that the light ray 40 deflected by the above-mentioned one reflector 58 is directed toward a direction parallel to the axis 16 and at a distance from the axis 16 by the above-mentioned other reflector 58.

On the other hand, one reflector 58 of the second optical path changing unit 56 is disposed such that the light ray 40 sent through the first optical path changing unit 54 is deflected inward in the radial direction of the second shield body 14, i.e., downward by the above-mentioned one reflector 58, and the other reflector 58 is disposed such that the light ray 40 is directed toward a direction along the axis 16 by the above-mentioned other reflector 58.

A hole closed by a lid 64 is formed in each of both ends of the second shield body 14. The holes are utilized when the first and second shield bodies 12, 14 are connected to each other and disconnected from each other, when the optical path changing units 54, 56 are mounted and removed, when the water supply pipe 30 is connected and disconnected, and when the drain pipe 32 is connected and disconnected.

When the tunnelling apparatus 10 is properly advanced so that the axis of the tunnelling apparatus 10 is aligned with the planned reference line, the light ray 40 is directed toward a direction along the axis 16 to reach the first optical path changing unit 54, then directed by the first optical path changing unit 54 toward the optical path keeping out of the auxiliary pump 52 to be incident on the second optical path changing unit 56, then directed by the second optical path changing unit 56 toward a direction along the axis 16, and finally incident on the center of the target 42. Accordingly, the light ray 40 is not hindered from travelling by the auxiliary pump 52.

On the contrary, when the tunnelling apparatus 10 is not properly advanced, and as a result, the axis of the tunnelling apparatus 10 is deviated from the planned reference line, the light ray 40 is directed toward the optical path deviated from the axis 16, so that the light ray 40 is finally incident on a portion diviated from the center of the target 42. In this case, since the light ray 40 is also directed by the first and second optical path changing units 54, 56 toward the optical path keeping out of the auxiliary pump 52, the light ray 40 is not hindered from travelling by the auxiliary pump 52.

## Claims

1. A shield tunnelling apparatus, comprising:
a first tubular shield body (12) to which a cutter assembly (26) for excavation and a drive mechanism (28) for driving said cutter assembly (26) are attached;
a second tubular shield body (14) connected to the rear of said first shield body (12);
a target (42) disposed in said first shield body (12) so as to receive a light ray (40) directed along the axis (16) of said second shield body (14);
characterized in that:
first and second optical path changing means (54, 56) for changing said light ray (40) are respectively disposed at the upstream and downstream sizes of one or more installations (52) placed in said second shield body (14) to block said axis (16), so that said light ray (40) may be directed to avoid said installment(s) (52);
said first optical path changing means (54) is disposed in said second shield body (14) for changing the optical path of said light ray (40), so that said light ray (40) may be directed toward an optical path displaced from said axis (16) and parallel to said axis (16); and
said second optical path changing means (56) is disposed in said second shield body (14) for changing the optical path of the light ray deflected by said first optical path changing means (54), so that the light ray deflected by said first optical path changing means (54) may be directed toward said axis (16) and then along the axis (16) of said second shield body (14).

2. A shield tunnelling machine according to claim 1, characterized in that:
said first optical path changing means (54) includes a first reflector (58) for deflecting said light ray (40) radially outward of said second shield body (14), and a second reflector (58) for deflecting the light ray deflected by said first reflector (58) in the direction parallel to the axis (16) of said axis (16); and
said second optical path changing means (56) includes a third reflector (58) for deflecting the light ray deflected by said second reflector (58) toward said axis (16), said third reflector (58) being directed toward the second reflector (58), and a fourth reflector (58) for deflecting the light ray deflected by said third reflector (58), said fourth reflector (58) being directed toward the third reflector (58).

## Patentansprüche

1. Tunnel-Schildvortriebsgerät, das aufweist:
einen ersten rohrförmigen Schildkörper (12), an dem eine Fräsanordnung (26) für den Aushub und ein Antriebsmechanismus (28) zum Antreiben der genannten Fräsanordnung (26) angebracht sind;
einen zweiten rohrförmigen Schildkörper (14), der mit der hinteren Seite des genannten ersten Schildkörpers (12) verbunden ist;
ein Ziel (42), das in dem genannten ersten Schildkörper (12) so angeordnet ist,
daß es einen Lichtstrahl (40) empfängt, der längs der Achse (16) des genannten zweiten Schildkörpers (14) gerichtet ist;
dadurch gekennzeichnet, daß:
erste und zweite, den optischen Pfad verändernde Mittel (54, 56) zum Ändern des genannten Lichtstrahles (40), die an der stromaufwärtigen bzw. stromabwärtigen Seite einer oder mehrerer Einrichtungen (52), welche in dem genannten zweiten Schildkörper (14) derart gelegen sind, daß sie die genannte Achse (16) blockieren, so angeordnet sind, daß der Lichtstrahl (40) so gerichtet werden kann, daß er die genannte(n) Einrichtung(en) (52) meidet;
daß das genannte erste, den optischen Pfand verändernde Mittel (54) in dem genannten zweiten Schildkörper (14) zur Änderung des optischen Pfades des genannten Lichtstrahls (40) so angeordnet ist, daß der genannte Lichtstrahl (40) auf einen optischen Pfad ausgerichtet werden kann, der im Abstand von der genannten Achse (16) und parallel zur genannten Achse (16) verläuft; und
daß das genannte zweite, den optischen Pfad verändernde Mittel (56) in dem genannten zweiten Schildkörper (14) zur Änderung des optischen Pfades des durch das genannte erste, den optischen Pfad verändernde Mittel (54) abgelenkten Lichtstrahls so angeordnet ist, daß der durch das genannte erste, den optischen Pfad verändernde Mittel (54) abgelenkte Lichtstrahl, zu der genannten Achse (16) hin und sodann längs der Achse (16) des genannten zweiten Schildkörpers (14) gelenkt werden kann.

2. Tunnel-Schildvortriebsgerät nach Anspruch 1, dadurch gekennzeichnet, daß das genannte erste, den optischen Pfad verändernde Mittel (54) einen ersten Reflektor (58), um den genannten Lichtstrahl (40) radial im genannten zweiten Schildkörper (14) nach außen abzulenken, sowie einen zweiten Reflektor (58) beinhaltet, um den durch den genannten ersten Reflektor (58) abgelenkten Lichtstrahl in die parallel zur Achse (16) verlaufende Richtung abzulenken; und
daß das genannte zweite, den optischen Pfad verändernde Mittel (56) einen dritten Reflektor (58) zum Ablenken des durch den genannten zweiten Reflektor (58) abgelenkten Lichtstrahls zu der genannten Achse (16) hin, wobei der genannte dritte Reflektor (58) dem zweiten Reflektor (58) zugekehrt ist, sowie einen vierten Reflektor (58) beinhaltet, um den durch den genannten dritten Reflektor (58) abgelenkten Lichtstrahl abzulenken, wobei der genannte vierte Reflektor (58) dem dritten Reflektor (58) zugekehrt ist.

## Revendications

1. Tunnelier à élément de protection, comprenant :
un premier corps de protection (12) tubulaire auquel sont fixés un ensemble de coupe (26) conçu pour creuser une excavation et un mécanisme d'entraînement (28) conçu pour entraîner ledit ensemble de coupe (26);
un deuxième corps de protection (14) tubulaire connecté à l'arrière dudit premier corps de protection (12);
une cible (42) disposée dans ledit premier corps de protection (12) de manière à recevoir un rayon lumineux (40) dirigé le long de l'axe (16) dudit deuxième corps de protection (14);
caractérisé en ce que :
des premier et deuxième moyens de modification de chemin optique (54, 56) pour modifier ledit rayon lumineux (40) sont respectivement disposés en amont et en aval d'une ou plusieurs installation(s) (52) placée(s) dans ledit deuxième corps de protection (14) pour bloquer ledit axe (16) de manière que ledit rayon lumineux (40) puisse être dirigé afin d'éviter ladite ou lesdites installation(s) (52);
ledit premier moyen de modification de chemin optique (54) est disposé dans ledit deuxième corps de protection (14) pour modifier le chemin optique dudit rayon lumineux (40), de manière que ledit rayon lumineux (40) puisse être dirigé vers un chemin optique écarté dudit axe (16) et parallèle audit axe (16); et
ledit deuxième moyen de modification de chemin optique (56) est disposé dans ledit deuxième corps de protection (14) pour modifier le chemin optique du rayon lumineux dévié par ledit premier moyen de modification de chemin optique (54) de manière que le rayon lumineux dévié par le moyen de modification du chemin optique (50) puisse être dirigé vers ledit axe (16) et ensuite le long de l'axe (16) dudit deuxième corps de protection (14).

2. Tunnelier à élément de protection selon la revendication 1, caractérisé en ce que :
ledit premier moyen de modification de chemin optique (54) comprend un premier réflecteur (58) pour dévier ledit rayon lumineux (40) radialement vers l'extérieur dudit deuxième corps de protection (14) et un deuxième réflecteur (58) pour dévier le rayon lumineux dévié par ledit premier réflecteur (58) dans la direction parallèle à l'axe (16) dudit axe (16); et
ledit deuxième moyen de modification de chemin optique (56) comprend un troisième réflecteur (58) pour dévier le rayon lumineux dévié par ledit deuxième réflecteur (58) vers ledit axe (16), ledit troisième réflecteur (58) étant dirigé vers ledit deuxième réflecteur (58) et un quatrième réflecteur (58), pour dévier le rayon lumineux dévié par ledit troisième réflecteur (58), ledit quatrième réflecteur (58) étant dirigé vers le troisième réflecteur (58).
